# EUROPEAN PATENT APPLICATION

(11) **EP 2 939 778 A1**
(43) Date of publication of application: **04.11.2015**
(21) Application number: 14166438.3
(22) Date of filing: 29.04.2014
(51) Int. Cl.: B23D 57/00, B65H 57/14, B65H 57/26

(54) **Quick mountable pulley for a wire saw device**

(71) Applicant: Applied Materials Switzerland Sàrl, 1033 Cheseaux-sur-Lausanne (CH)
(72) Inventor: Soubielle, Sebastien, 1032 Romanel-sur-Lausanne (CH)
(74) Representative: Zimmermann & Partner Patentanwälte mbB

(57) **Abstract**

A pulley configured for a wire saw device having a wire forming a wire web is described. The pulley (400) includes a reception (414) which is configured for snap-lock engagement with a complementary engagement element, and a pull-element (430) connected to the pulley for releasing the snap-lock engagement by pulling.

## Description

### FIELD OF THE DISCLOSURE

Embodiments of the present disclosure relate to a pulley for and in a wire saw device, and a wire saw device. More particularly, embodiments of the present disclosure relate to a pulley configured for a wire saw device, and a wire saw device for cutting or sawing hard materials such as blocks of silicon, sapphire or quartz, e.g., for cutting silicon wafers, for a squarer, for a cropper or the like.

### BACKGROUND

There exist wire saw devices for cutting blocks or bricks, thin slices, e.g. semiconductor wafers, from a piece of hard material such as silicon. In such devices a stretched wire is fed from a supply spool and is both guided and tensioned by pulleys for guiding the wire in the cutting area. Conventionally, after cutting, the used wire is guided via pulleys to a take-up spool.

In the wire saw industry, transmitter pulleys that convey the wire from the spools to the wire-guides can be made of a tire and a wheel. Conventionally, the wheel of the pulley is made of machined aluminum. The tire can be a consumable part, since it gets worn by contact and friction with the wire. Accordingly, the tire can be a removable part for separate replacement when the tire is worn. It was found that using pulleys with a removable tire bears the risk that during tire replacement the tire is not properly mounted. For example, a not properly mounted tire on the rim of the wheel may cause vibrations of the wire guided by the pulley. Hence, there also exist pulleys having permanent tires, i.e. non-removable tires, which can be over-molded on the rim of the wheel. When the pulley with an over-molded tire on the rim of the wheel is worn the complete pulley needs to be replaced. Accordingly, as the pulleys are exchanged regularly, using pulleys with an over-molded tire causes high cost of operation.

Typically, pulleys employed in wire saw devices are mounted on bearing boxes, for example by screws located other around the rotation axis of the pulley. Accordingly, mounting or demounting of pulleys by screwing or unscrewing operations is time consuming, and has a negative impact on the uptime of the machine if pulleys have to be replaced frequently. Accordingly, there is a desire to further improve pulleys.

### SUMMARY

In view of the above, a pulley configured for a wire saw device, particularly for cutting semiconductor material, having a wire forming a wire web and a wire saw device according to the independent claims are provided. Further advantages, features, aspects and details are apparent from the dependent claims, the description and drawings.

According to one aspect, a pulley configured for a wire saw device having a wire forming a wire web is provided. The pulley includes a reception which is configured for snap-lock engagement with a complementary engagement element, and a pull-element connected to the pulley for manually releasing the snap-lock engagement by pulling.

According to a further aspect, a wire saw device for cutting semiconductor material having a wire forming a wire web is provided. The wire saw device includes at least one pulley according to embodiments described herein.

According to another aspect, a use of a pulley according to embodiments described herein in a wire saw device is provided.

According to a further aspect, a pulley configured for a wire saw device having a wire forming a wire web is provided. The pulley includes a reception which is configured for snap-lock engagement with a complementary engagement element, and a pull-element connected to the pulley for manually releasing the snap-lock engagement by pulling. The pull-element includes a finger grip portion. Further, the pull-element includes a flexible connecting portion connected to the pulley, wherein the flexible connecting portion is integrally connected to the pulley. The pulley is made of a thermoplastic or thermoplastic elastomer. The pulley includes a radially outward directed wire guiding portion having a groove structure defining a wire guiding plane.

Furthermore, embodiments according to the disclosure are also directed at methods by which the described apparatus operates. It includes method steps for carrying out every function of the apparatus.

### BRIEF DESCRIPTION OF THE DRAWINGS

So that the manner in which the above recited features of the disclosure described herein can be understood in detail, a more particular description, briefly summarized above, may be had by reference to embodiments. The accompanying drawings relate to embodiments of the disclosure and are described in the following:
- FIG. 1A: shows a schematic view of a pulley according to embodiments described herein;
- FIG. 1B: shows a schematic view of a pulley according to embodiments described herein;
- FIG. 1C: shows a schematic cross-sectional view of a pulley according to embodiments described herein along line A-A as depicted in FIG. 1A;
- FIG. 1D: shows an enlarged schematic cross-sectional view of a reception of a pulley according to embodiments described herein;
- FIG. 2: shows an enlarged schematic cross-sectional view of a reception of a pulley according to embodiments described herein mounted to a complementary element;
- FIG. 3A: shows a schematic perspective view of a pulley according to embodiments described herein;
- FIG.3B: shows a schematic perspective view of a pulley according to embodiments described herein for illustrating the function of the pull element;
- FIG. 4A: shows a schematic view of a pulley according to embodiments described herein;
- FIG. 4B: shows a schematic cross-sectional view of a pulley according to embodiments described herein along line B-B as depicted in FIG. 4A;
- FIG. 5: shows a schematic view of a pulley according to embodiments described herein;
- FIG. 6A: shows an enlarged schematic cross-sectional view of a reception of a pulley according to embodiments described herein mounted to a complementary element;
- FIG. 6B: shows a schematic cross-sectional view of an interface of a pulley with a shaft according to embodiments described herein;
- FIG. 6C: shows a schematic cross-sectional view of an interface of a pulley with a shaft according to embodiments described herein;
- FIG. 7: shows a schematic view of a wire saw device according to embodiments described herein; and
- FIG. 8: shows a perspective view of a wire management unit of a wire saw device according to embodiments described herein.

### DETAILED DESCRIPTION

Reference will now be made in detail to the various embodiments, one or more examples of which are illustrated in the figures. Within the following description of the drawings, the same reference numbers refer to same components. In the following, only the differences with respect to individual embodiments are described. Each example is provided by way of explanation and is not meant as a limitation. Further, features illustrated or described as part of one embodiment can be used on or in conjunction with other embodiments to yield a further embodiment. It is intended that the description includes such modifications and variations.

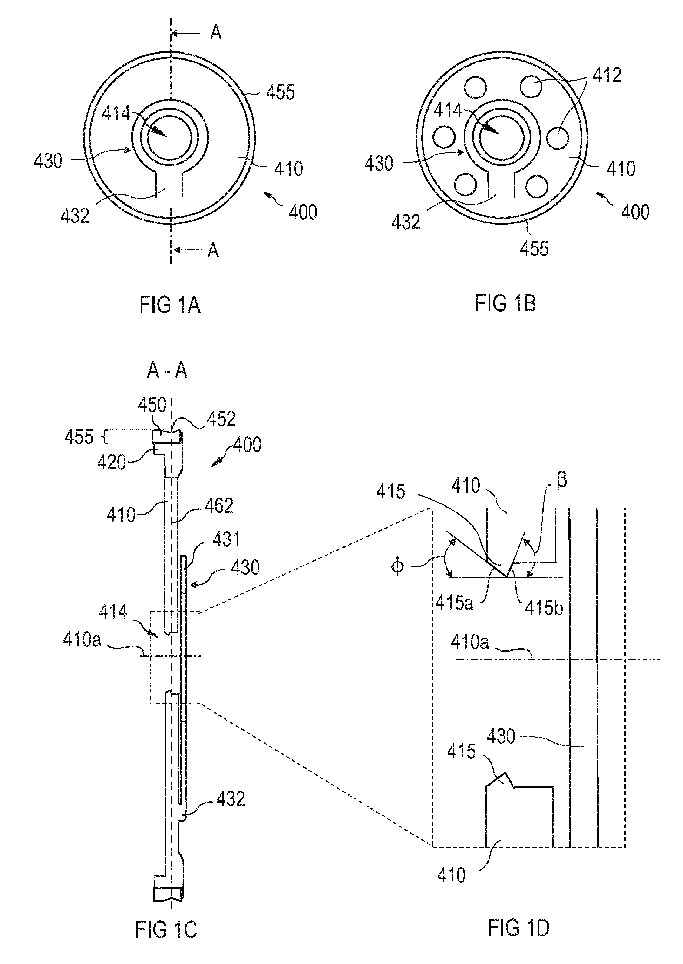

In FIGS. 1A and 1B a schematic view and a cross-sectional view of a pulley according to embodiments described herein is shown. The pulley 400 includes a wheel portion 410 around the pulley axis 410a, and a wire guiding portion 455 at a radially outer portion of the pulley for guiding a wire. The pulley includes a reception 414 which is configured for snap-lock engagement with a complementary engagement element. Further, as exemplarily shown in FIGS. 1A to 1D, according to embodiments described herein the pulley includes a pull-element 430 which is connected to the pulley and configured for releasing the snap-lock engagement by pulling.

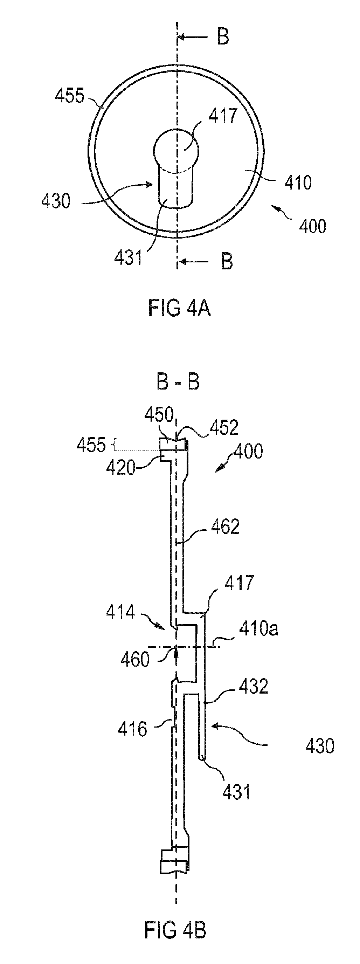

According to embodiments described herein, the pull-element 430 includes a finger grip portion 431. The finger grip portion can be a ring as exemplarily shown in FIGS 1A, 1B, 3A, 3B and 5. Alternatively, the finger grip portion can be a strip as exemplarily shown in FIGS. 4A and 4B. Embodiments of the finger grip portion as described herein are beneficial for quick and easy releasing a snap-lock engagement of a pulley with a complementary engagement element by pulling.

With exemplary reference to FIGS 1A to 1D, according to embodiments which can be combined with other embodiments described herein, the pull-element 430 comprises a flexible connecting portion 432 connected to the pulley. The flexible connecting portion can be integrally connected to the pulley. According to embodiments described herein the term "integrally connected" is to be understood as a description for a "one-piece structure". According to embodiments described herein, a one-piece structure of a pulley as described herein can for example be obtained by injection molding. Accordingly, embodiments of the pulley described herein provide an easy producible low cost pulley. Further, embodiments of the pulley described herein provide a quick mountable and demountable pulley. Accordingly, by providing embodiments of a pulley as described herein the time required for replacing the pulleys can be reduced, which prolongs the uptime of the wire saw or any other machine in which embodiments of the pulley as described herein are used.

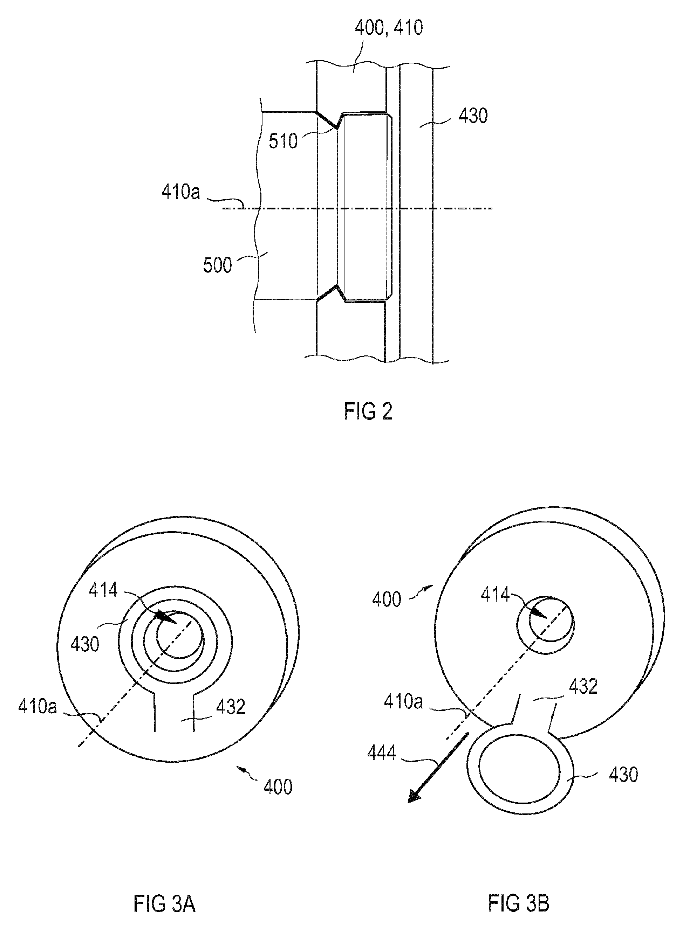

According to embodiments which can be combined with other embodiments described herein, the pull-element 430 can be connected to the pulley at a radially outer portion of a side of the pulley, as exemplarily shown in FIGS. 1A to 1C, and FIGS. 3A and 3B. Alternatively, with exemplary reference to FIGS. 4A , 4B, 5 and 6 the pull-element 430 can be connected to the pulley at a central side portion, for example on the side of a shaft inset 417 for coupling the pulley to a shaft. As a further option, as exemplary shown in FIG. 4B, an alignment opening 416 for aligning the pulley with a shaft axis onto which the pulley is to be mounted can be provided.

. For better understanding of the function and use of the pull element 430, FIG. 3B shows a schematic perspective view of a pulley according to embodiments described herein in which the pull element is pulled, as indicated by arrow 444. From FIG. 3A and FIG. 3B, a skilled person understands that upon pulling the pull-element, the flexible connecting portion 432 connected to the pulley can bend in the pulling direction.

With exemplary reference to FIGS. 1C and 1D, the reception 414 can include a projection element 415 for snap-lock engagement with a complementary engagement element. According to embodiments described herein, the projection element 415 can be arranged radially inwardly of the reception. The projection element 415 may be an integral part of the wheel portion. According to embodiments the projection element 415 is annular radially inwardly projecting ring element. Accordingly, an easy producible reception configured for for snap-lock engagement is provided.

FIG 1D shows an enlarged schematic cross-sectional view of a reception of a pulley according to embodiments described herein. According to embodiments which can be combined with other embodiments described herein, the projection element 415 can include a first side surface 415a and a second side surface 415b. As exemplarily shown in FIG 1D, the first side surface 415a may be arranged with respect to the pulley axis 410a under a first angle phi (Φ) and the a second side surface 415b may be arranged with respect to the pulley axis 410a under a second angle beta (β). According to embodiments of the projection element 415 the first angle phi (Φ) may be may be different than the second angle beta (β). Particularly, the first angle phi (Φ) can be smaller than the second angle beta (β).

According to embodiments which can be combined with other embodiments described herein, by selecting a value of the first angle phi (Φ) a force required for mounting the pulley on a corresponding mounting element can be set. For example, by selecting a smaller value for the first angle phi (Φ) the force required for mounting the pulley on a corresponding mounting element can be set smaller compared a case in which a higher value of the first angle phi (Φ) would be selected. Accordingly, by selecting a higher value for the second angle beta (β), the force required for demounting, particularly the pulling force required for manually releasing the snap-lock engagement can be set to a higher force compared to a case in which a smaller value of the second angle beta (β) would be selected.

FIG. 2 exemplarily illustrates a pulley according to embodiments described herein, which is mounted to a complementary element, for example a shaft 500 having an annular recess. From FIG. 2, a skilled person understands that in case the pulley is mounted on the shaft 500, which corresponds to a mounting direction from right to left in FIG. 2, a lower force for mounting is required compared to the force which would be required to pull off the pulley from the shaft 500, which corresponds to a pulling direction from left to right in FIG. 2.

According to embodiments which can be combined with other embodiments described herein, the reception 414 can be configured as a bearing receiving portion. The bearing receiving portion can be adapted for receiving a bearing that can be used at 2000 rpm and more, or even 3000 rpm or more, e.g., 2000 rpm to 4000 rpm.

According to some embodiments, as exemplarily shown in FIG. 1B, openings 412 can be provided in the wheel portion 410 such that for example a spoke structure is provided in the wheel portion. This can further decrease the weight and thus the moment of inertia of the pulley. According to some embodiments, for example, 3 to 10, typically 6 to 8 openings 412 can be provided in the wheel portion. Providing openings 412 in the wheel portion of the pulley may reduce the moment of inertia.

According to embodiments described herein, the edges of the openings 412, the edges of the tire receiving portions and other structures, for example protrusion and recess in the pulley can be rounded or have rounded edges with a radius of curvature of several mm, e.g., at least 1 mm or 2 mm to 5 mm. This may further reduce the weight and might improve the pulley behavior during fast spinning. Additionally, slurry, cooling fluid, or other solid particles from the process cannot sediment at the pulleys as compared to a corresponding shape having sharp edges.

As shown in Fig. 1C, according to embodiments described herein, the wire guiding portion 455 may include a tire 450, which can be a separate component. For example, the tire 450 can be mounted on a wheel portion 410, particularly on a radially outwardly wheel portion. Further, the tire 450 may be detachably connectable to the wheel portion 410. According to embodiments which can be combined with other embodiments described herein, the tire 450 provides a wire guiding portion of the pulley, including one or more grooves for guiding the wire.

As exemplary shown in FIG. 1C, according to embodiments the wheel portion 410 is configured to rotate around the pulley axis 410a. The wheel portion may include a tire carrying portion 420. As shown in FIG. 1B, a groove 452 can be provided in the wire guiding portion 455, particularly in the tire 450, for guiding the wire on the pulley 400. According to embodiments described herein, the groove 452 defines a plane 462 which is indicated by the dotted line in FIG. 1B. During rotation of the pulley the wire is guided in this plane 462. Therefore, in the present disclosure, that plane 462 may also be referred to as wire guiding plane.

According to some embodiments, which can be combined with other embodiments described herein, the tire carrying portion 420 may be an integral part of the wheel portion. According to embodiments described herein the term "being an integral part of" is to be understood as a description for a "one-piece structure". According to embodiments described herein, such a one-piece structure can for example be obtained by injection molding.

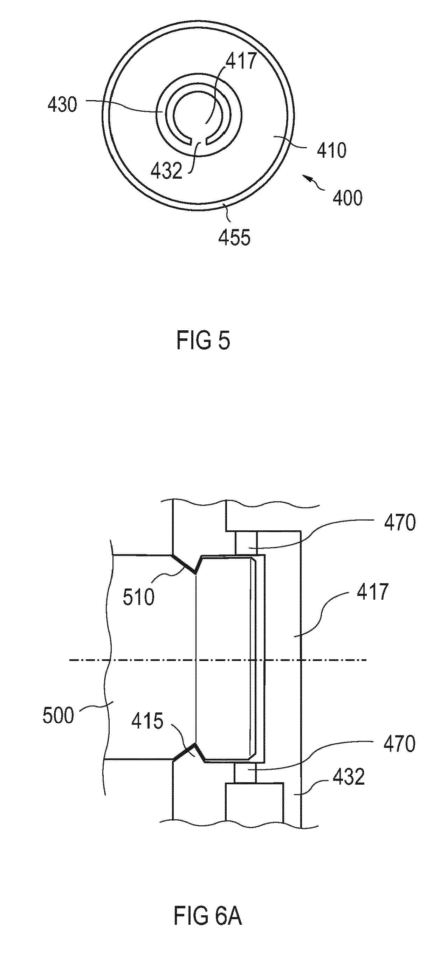

According to some embodiments, which can be combined with other embodiments described herein, the pulley may include a plurality of strain relief elements 470 for relieving the strain in the pulley upon pulling on the pull-element for releasing the snap-lock engagement. As exemplarily shown in FIG. 6A, the strain relief elements 470 can be configured as cavities, for example radially arranged around the pulley axis. Particularly, the strain relief elements 470 may be arranged circumferentially around the shaft inset 417 as exemplarily shown in FIG. 6A.. According to some embodiments, the strain relief elements may include a foam structure, particularly a plastic foam structure. Accordingly, embodiments as described herein provide a pulley having improved mechanical stability and strain relief properties for quick release of a snap-lock engagement, particularly by pulling as described herein.

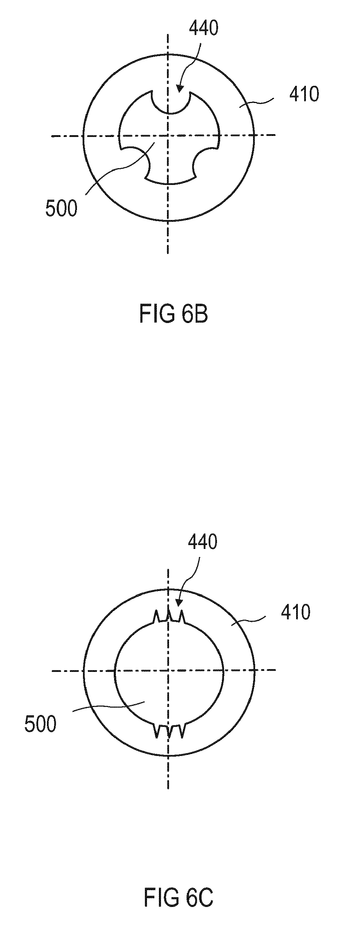

According to embodiments, which can be combined with other embodiments described herein, wherein the reception 414 of the pulley is configured for torque transmission form a shaft 500 to the pulley. Accordingly, with exemplary reference to FIGS. 6B and 6C, the interface between the pulley, e.g. the wheel portion 410 of the pulley, and the shaft 500 on which the pulley can be mounted may include complementary torque-bearing elements 440. The torque-bearing elements are configured for transmitting a torque from the shaft on which the pulley can be mounted to the pulley. This can be particularly beneficial for pulleys which are driven, e.g. by a motor coupled to the shaft on which the pulley is mounted.

According to some embodiments, which can be combined with other embodiments described herein, the torque-bearing elements can be configured as grooves, particularly axially grooves, as exemplarily shown in FIGS. 6B and 6C. The grooves may include a rounded shape, as exemplarily shown in FIG. 6B and/or a triangular shape, as exemplarily shown in FIG. 6C. The torque-bearing elements may be arranged around the complete circumference of the interface between the pulley and a shaft, as exemplarily shown in FIG. 6B. Alternatively, the torque-bearing elements may be arranged on least a section around the circumference of the interface between the pulley and a shaft, for example on two opposing sections of the circumference of the interface between the pulley and a shaft, as exemplarily shown in FIG. 6C. It is apparent to a person skilled in the art that according to embodiments described herein the torque-bearing elements may be of any suitable shape for torque transmission.

According to embodiments described herein, the pulley is made of a plastic material, particularly a thermoplastic or thermoplastic elastomer. By providing a pulley made of a plastic material a low cost pulley is provided. Further, a pulley is provided which can easily be manufactured for example by injection molding. Accordingly, according to some embodiments the pulley is an injection-molded pulley.

In embodiments in which the pulley is made of a thermoplastic, the thermoplastic is at least one selected from the group consisting of: Acrylnitirl-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), and Polyvinylchlorid (PVC). Alternatively, in embodiments in which the pulley is made of a thermoplastic elastomer, the thermoplastic elastomer is at least one selected from the group consisting of: polyamide, thermoplastic polyurethane (TPU), thermoplastic copolyester, thermoplastic polyamides, elastomeric alloys (TPE-v or TPV), Polyolefin blends (TPE-o) and styrenic block copolymer (TPE-s). Accordingly, a pulley is provided which can easily be manufactured for example by injection molding.

According to some embodiments, which can be combined with other embodiments described herein, the plastic material has a density of 2.5 g/cm³ or less, for example of 2.0 g/cm³ or less. According to further optional modification, the plastic material density can be 1.5 g/cm³ or less, for example from 1.0 g/cm³ to 1.5 g/cm³. Accordingly, as a further alternative or optional aspects the moment of inertia of the pulley can be 5.0*10⁻⁴ kg*m² or less, particularly 3.5*10⁻⁴ kg*m² or less This can result in a reduced wire breakage probability, especially during stop or emergency stop of the wire saw device, during which the inertia of pulleys might generate additional tension on a wire.

In light of the above, the weight of the pulleys can, for example be reduced by 30% to 60% as compared to aluminum pulleys. According to some embodiments, the electrically conduciveness can be provided by electrically conductive fibers such as carbon fibers which are embedded in the plastic material. For example carbon fiber charged polyamide can be used.

According to further embodiments, which can be combined with other embodiments described herein, the plastic material included in the pulley can be resistant to polyethylene glycol, water based coolants adapted for sawing in a wire saw device, e.g. with diamond wire, and/or combinations thereof.

Common pulleys for guiding the wire through a wire saw device are made out of metal, for example aluminum, so that they provide conductivity for a wire break detection system. Aluminum pulleys have a comparably low mass as compared to other metal pulleys. The further increasing demand for faster cutting, thinner wires, faster wire break detection and new types of wires, for example diamond wires, bring the desire for even further improvements. According to embodiments described herein, pulleys are made of an electrically conductive plastic material. Accordingly, the mass and, thus, the moment of inertia of the pulley can be further reduced, electrical conductivity for wire breakage detection can be provided and a deformation of the wire during maintenance and/or operation can also be reduced. Accordingly, a lower moment of inertia of the pulley and smoother spinning can be provided while being capable of having a wire break detection current flowing through the pulley.

According to embodiments, which can be combined with other embodiments described herein, the pulley includes electrically conductive plastic material. For example, the wheel portion of the pulley may include an electrically conductive plastic. According to some embodiments, the electrically conductive plastic material is an electrically conductive thermoplastic or thermoplastic elastomer. The material properties of the electrically conductive plastic material allow for a further reduction of the weight by providing a wheel portion with spokes or wheel portion openings for reducing the overall weight of the pulley.

According to further embodiments, which can be combined with other embodiments described herein, the plastic material is a synthetic polymeric material including fibers, particularly electrically conductive fibers. For example, the electrically conductive fibers can be carbon fibers. The carbon fibers may also increase the stiffness of the pulley or the wheel portion, respectively.

According to embodiments which can be combined with other embodiments described herein, the tire 450 as exemplarily shown in FIGS. 1C and 4B can be made of an insulating material. Since the tire 450 is electrically insulating, a wire wrapped on the pulley, which can be biased to a potential, is electrically insulated from the wheel portion 410. In a case in which the wire is biased by a power supply, and the loose end of the wire touches the pulley at the wheel portion after breakage, a current can be detected by a measurement device.

According to some embodiments which can be combined with other embodiments described herein, the center of mass can be located in the wire guiding plane. In FIG. 4B this is indicated by arrow 460 symbolizing a weighing scale. Since the center of mass is in the wire guiding plane the pulley 400, which would be supported on a pivot point 460 as exemplarily shown in FIG. 4B, is balanced. According to some further embodiments, which can be combined with other embodiments described herein, the wheel portion may have protrusions 422 or recesses (not shown) such that the pulley 400 is fully balanced with respect to the wire guiding plane in which the wire is guided. For example, the protrusion 422 can compensate for the tire carrying portion 420.

As described above, the pulleys according to embodiments described herein embodiments of pulleys described herein are adapted or configured for wire saw devices, they can be used in wire saw devices and/or can be a part of a wire saw device. Other aspects that can be used for making the pulley adapted or configured for a wire saw device, the pulley can have a groove structure which is made to guide a wire with a thickness of 150 µm or below, or a thickness of any of the other diameters mentioned above. It has to be noted that the groove structure is designed especially for the wire diameter and the cutting process in order to allow for high precision cutting, e.g. with a precision of 100 µm or below, or even of 50 µm or below.

According to further optional embodiments, the moment of inertia of the pulley can be 5.0*10⁻⁴ kg*m² or less, for example 3.5*10⁻⁴ kg*m² or less, such as for example from 1*10⁻⁴ kg*m² to 3.5*10⁻⁴ kg*m².

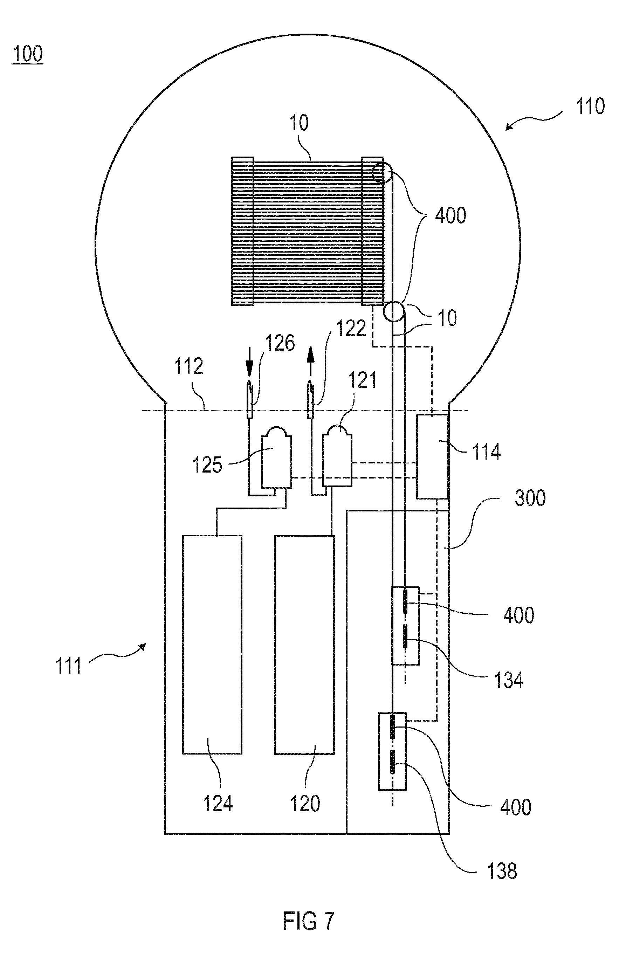

FIG. 7 shows an exemplary embodiment of a wire saw device 100 according to embodiments as described herein. The housing of the wire saw device can be separated into different areas as indicated by the dotted line 112. For example, a first housing portion may form a wire web compartment 110 and a second housing portion 111 may house a wire management system 300, an electrical cabinet 114, a first tank 120 and a second tank 124 as well as a first pump 121 and a second pump 125. The wire management system may be configured for feeding the wire 10 towards the wire web.

As exemplarily shown in Fig. 7, the wire can be guided over pulleys 400 to form a wire web. As can be seen from the wire web formed by the wire 10 in the wire web compartment 110, the system shown in FIG. 7 can be used to slice wafers. The wire that is used for sawing can be provided with an abrasive material. As one option, the abrasive material can be provided as slurry. This may be done shortly before the wire touches the material to be cut. Accordingly, the abrasive is carried to the cutting position by the wire for cutting the material. As another option, the abrasive can be provided on the wire with a coating. For example, diamond particles can be provided on a metal wire, e.g. with a coating, wherein the diamond particles are imbedded in the coating of the wire. Accordingly, the abrasive is firmly connected with the wire.

According to some embodiments of the wire saw device, a first tank 120 can be used for unused cooling fluid, e.g. in the case where the wire saw device is operated with diamond wire, or can be used e.g. for unused (fresh) slurry, in the case where the wire saw device 100 is operated with a wire requiring additional abrasive. The first pump 121 pumps the cooling fluid (or slurry, respectively) towards the desired position in the cutting area. This is indicated in FIG. 7 by conduit 122. The used cooling fluid (or slurry) may flow back through conduit 126 and is pumped by the second pump 125 into the second tank 124. In those cases where cooling fluid or slurry is used, a portion of the used consumable fluid can be re-used if it is reinserted into the first tank 120. Thus, according to different embodiments only a portion of the consumable fluid, all of the consumable fluid or none of the consumable fluid may be reused and, thus, be reinserted in the first tank 120. As one example, an additional valve might be provided in conduit 126 for selectively choosing the tank into which the used fluid is pumped. According to another example, a fluid connection between the second tank 124 and the first tank 120 can be provided in order to reinsert a portion of the used fluid in the first tank 120. According to different embodiments, as already described above, the consumable fluid can be cooling fluid or slurry. In case that slurry is used, the slurry also takes over the function of cooling the position, at which the wire cuts the material.

As indicated by the dotted lines in FIG. 7 the electrical cabinet 114 may serve to control the operation of the different components. For example, operation of the first pump 121 and the second pump 125, rotation of the supply-spool 134 and the take-up spool 138 can be controlled. Further, additionally or optionally, the filling level of the first tank 120 and the second tank 124 can be measured and respective signals can be fed to the control unit. According to further embodiments, other control signals and monitoring signals can be fed to and from the electrical cabinet 114. For example signals from the motors driving the spools, pressure signals for feeding the consumable fluids like slurry or cooling fluid, or a wire break detection signal can be fed to and from the electrical cabinet. It is apparent to a person skilled in the art that an electrical cabinet or a control unit can be provided at a different location in the wire saw device, e.g., also external of the wire device, and corresponding control signals from and to the control unit can be provided accordingly.

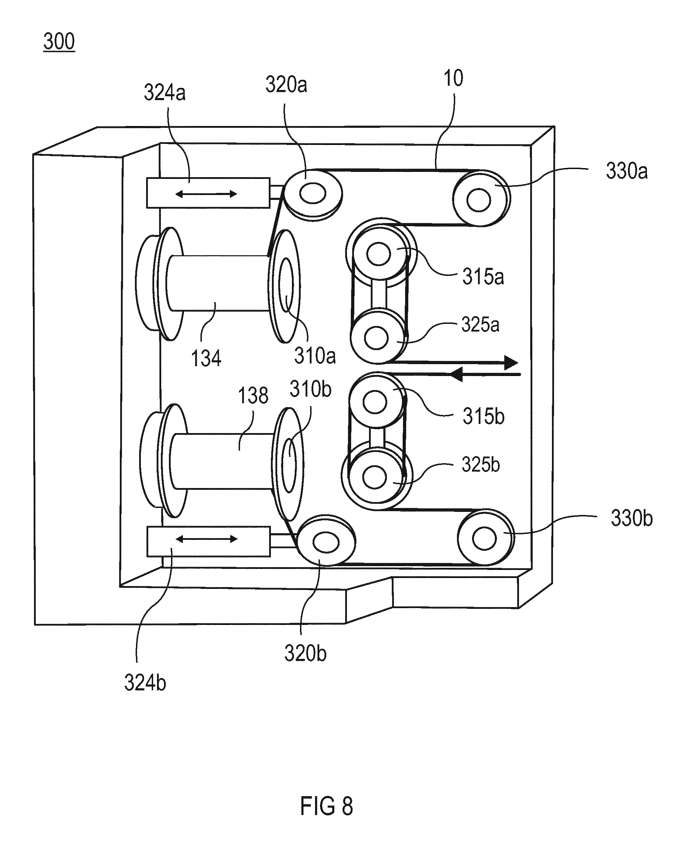

According to some embodiments, which can be combined with other embodiments described herein, the wire is provided on a supply-spool 134. As exemplarily shown in Fig. 8, according to embodiments the wire is guided over a plurality of pulleys 400 into the wire web compartment 110 for forming the wire web in the cutting area. After cutting, the wire is guided by a further pulley towards the wire management system 300 and is therein provided over pulleys on the take-up spool 138. According to embodiments, the wire is guided from the wire management system 300 to the wire cutting area and back with a wire speed of 10 m/s or higher, typically in a range of 15 to 20 m/s or even up to 25 m/s or 40 m/s.

According to further embodiments, which can be combined with other embodiments described herein, the wire management system 300 can be adapted for bi-directional use, such that in one direction the wire is fed from the supply-spool 134 to the take-up spool 138 and vice versa. The bi-directional use of the wire saw device may be of particular interest if diamond wire is used.

According to different embodiments, a wire saw device can be a cropper, a squarer, a wire saw or a multiple wire saw. A cropper is to be understood as a device, which can be used to saw end pieces from bricks or blocks, which have been separated into bricks in a squarer. A squarer is a wire saw that saws the silicon ingot into squares of the desired size such that a wire saw or a multiple wire saw can saw wafers from the bricks in a wafering process.

FIG. 8 shows a perspective view of a wire management system 300 according to embodiments, in which embodiments of the pulley as described herein may be employed. The exemplary embodiment of FIG. 8 includes a supply-spool 134, mounted on spool shaft 310a, and the pulleys 320a, 330a, 315a and 325a are arranged to guide the wire, particularly to the wire web compartment. According to an exemplary embodiment of the wire management system as shown in FIG. 8, a take-up spool 138 mounted on spool shaft 310b may be provided the pulleys 320b, 330b, 315b and 325b are arranged to guide the wire from the wire web compartment to the take-up spool 138.

Further, as exemplarily shown in FIG. 8, the wire management system may include a pulley moving device 324a which is configured for positioning the pulley 320a at a desired position over the supply-spool 134. Accordingly, the wire management system may include a further pulley moving device 324b which is configured for positioning the pulley 320b at a desired position over the take-up spool 138. The pulley moving device 324a, 324b can be configured as a retractable or telescopic bar. The retractable or telescopic bar can be longitudinally movable along a bar axis parallel to the spool axis. As exemplarily shown in FIG. 8 the pulley moving device 324a, 324b can be mounted to a wall portion of a main frame portion of the wire saw device.

According to embodiments, a wire saw may include at least one pulley, particularly a plurality of pulleys, for example all pulleys, according to embodiments of the pulley as described herein. The pulleys and the wire saw device according to embodiments described herein are particularly useful if thin wires or wires with a coating, e.g. a diamond coating, are used. According to some embodiments, the wire saw device 100 includes at least one pulley according to any of the embodiments described herein. Particularly, the wire saw device may include a wire management system 300 and/or a wire web compartment 110, wherein at least one of the wire management system and/or the wire web compartment includes a engagement element configured for complementary snap-lock engagement with the reception 414 of the pulley.

Accordingly, in embodiments, which can be combined with other embodiments described herein, the wire management system and wire saw devices described herein are adapted for thin wires having a diameter below about 150 µm, such as diameters between about 100 µm and about 150 µm, particularly between about 50 µm and about 150 µm, more particularly between 50 µm and 100 µm, for example 120 µm. In other cases embodiments may also have a wire diameter as low as for example 100 µm, 80 µm, 70 µm or 60 µm.

Further, the wire management system and wire saw devices described herein are adapted for coated wires, for example a wire having a nickel coating with diamond particles embedded therein. Such wires may have a diameter of below about 150 µm, such as diameters between about 100 µm and about 150 µm, particularly between about 50 µm and about 150 µm, more particularly between 50 µm and 100 µm, for example 120 µm. In other cases embodiments may also have a wire diameter as low as for example 100 µm, 80 µm, 70 µm or 60 µm. For those wires a twisting of the wire might increase the risk of breaking of the wire or of damaging the coating, so that a twist-free operation is advantageous. By using diamond wire, the throughput may be increased by a factor of 2 or even more. When a diamond wire is used, further parts of the wire saw may be adapted to the diamond wire. For example, mechanical parts, electrical parts and/or software may be adapted to the use of diamond wire. When a diamond wire is used, further parts of the wire saw may be adapted to the diamond wire. For example, mechanical parts, electrical parts and/or software may be adapted to the use of diamond wire.

As described above, a plurality of pulleys are used in a wire saw devices described herein. In this regard, it has to be taken into account that there is the desire for higher cutting speeds and, higher wire speeds, thinner wires or different types of wires, such as diamond wires, and improved device control at the facility of the customer. During sawing operation the pulleys may rotate with rotation speeds of more than 1500 rpm around their respective axes. According to some embodiments, the pulleys are adapted for wire saw devices by being capable of rotation speeds of 2000 rpm and more, or even 3000 rpm or more, e.g., 2000 rpm to 4000 rpm. For example, during an emergency stop the wire saw device needs to be stopped as fast as possible. Accordingly, the inertia of the pulleys, that is the moment of inertia of the pulleys, result in the pulleys rotation not to stop immediately. This further pulley rotation may result in a harmful tension on the wire such that wire breakage may occur.

Further, according to some embodiments, which can be combined with other embodiments described herein, such a wire breakage can be detected as follows. The wire is biased to the potential having an absolute value of about 20 V to 120 V, such as 30 V to 60 V. Accordingly, a voltage between the wire and remaining wire saw device components such as the housing, the mainframe, the police, housing portions, or doors of cabinets, and the like is generated. For example, these further components can be on ground potential. If the wire breaks, the loose end of the wire touches one of the components of the wire saw device, for example a pulley including electrically conductive plastic material as described herein. The voltage between the wire and the wire saw device results in a current. Accordingly, a wire breakage detection system can monitor the existence of such a current and detect the breakage of the wire if such a current is detected.

According to embodiments described herein, a wire saw device with at least one pulley according to any of the embodiments described above is provided. According to one optional aspect, a plurality of pulleys employed in the wire saw have essentially the same moment of inertia. For example, the moment of inertia of the pulleys may not deviate from each other more than 10 % or more than 5 %. Typically, according to different implementations, the wire saw device can be an element selected from the group consisting of: a wire saw, a multiple wire saw, a squarer, and a cropper. According to further embodiments, which can be combined with other embodiments described herein, the wire saw device can further include a main body of the wire saw device, a voltage supply adapted for biasing the wire on an electrical potential and an electrical conductive path from the wheel portion of the pulley to the main body. Accordingly, some embodiments of the wire saw device as described herein are configured for wire break detection as described above.

While the foregoing is directed to embodiments of the disclosure, other and further embodiments may be devised without departing from the basic scope the present disclosure, and the scope thereof is determined by the claims that follow.

## Claims

1. A pulley (400) configured for a wire saw device having a wire forming a wire web, comprising:
a reception (414) which is configured for snap-lock engagement with a complementary engagement element, and
a pull-element (430) connected to the pulley for releasing the snap-lock engagement by pulling.

2. The pulley (400) according to claim 1, wherein the pull-element (430) comprises a finger grip portion (431), particularly in form of a ring or a strip, for manually releasing the snap-lock engagement by pulling, particularly wherein the reception (414) is configured for torque transmission from a shaft to the pulley.

3. The pulley (400) according to claims 1 or 2, wherein the pull-element (430) comprises a flexible connecting portion (432) connected to the pulley, particularly wherein the flexible connecting portion is integrally connected to the pulley.

4. The pulley (400) according to any of claims 1 to 3, wherein the pull-element (430) is connected to the pulley at a radially outer portion of a side of the pulley.

5. The pulley (400) according to any of claims 1 to 3, wherein the pull-element (430) is connected to the pulley at a central side portion of a side of the pulley.

6. The pulley (400) according to any of claims 1 to 5, wherein the pulley comprises a plurality of strain relief elements (470) for relieving the strain in the pulley upon pulling on the pull-element for releasing the snap-lock engagement, particularly wherein the plurality of strain relief elements comprise cavities radially arranged around the pulley axis.

7. The pulley (400) according to any of claims 1 to 6, wherein the pulley is made of a plastic material, particularly a thermoplastic or thermoplastic elastomer.

8. The pulley (400) according to claim 7, wherein the thermoplastic is at least one selected from the group consisting of: Acrylnitirl-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), and Polyvinylchlorid (PVC).

9. The pulley(400) according to claim 8, wherein the thermoplastic elastomer is at least one selected from the group consisting of: polyamide, thermoplastic polyurethane (TPU), thermoplastic copolyester, thermoplastic polyamides, elastomeric alloys (TPE-v or TPV), Polyolefin blends (TPE-o) and styrenic block copolymer (TPE-s).

10. The pulley (400) according to any of claims 1 to 9, wherein the moment of inertia of the pulley is 5.0*10⁻⁴ kg*m² or less, typically 3.5*10⁻⁴ kg*m² or less.

11. The pulley (400) according to any of claims 1 to 10, wherein the pulley comprises a radially outward directed wire guiding portion having a groove structure defining a wire guiding plane, wherein the center of mass of the pulley is located within the wire guiding plane.

12. The pulley (400) according to any of claims 1 to 11, wherein the pulley is an injection-molded pulley.

13. A wire saw device (100) for cutting semiconductor material having a wire forming a wire web, wherein the wire saw device comprises at least one pulley according to any of claims 1 to 12, particularly wherein the wire saw device comprises a wire management system (300) and/or a wire web compartment (110), wherein at least one of the wire management system and/or the wire web compartment comprises a engagement element configured for complementary snap-lock engagement with the reception (414) of the pulley.

14. Use of the pulley (400) according to any of claims 1 to 12 in a wire saw device.

15. The pulley (400) according to claim 1, wherein the pull-element (430) comprises a finger grip portion (431) and a flexible connecting portion (432) connected to the pulley, wherein the flexible connecting portion is integrally connected to the pulley, wherein the pulley is made of a thermoplastic or thermoplastic elastomer, and wherein the pulley comprises a radially outward directed wire guiding portion (455) having a groove structure defining a wire guiding plane (462).
